# EUROPÄISCHE PATENTSCHRIFT

(11) **EP 2 664 423 B1**
(45) Veröffentlichungstag und Bekanntmachung des Hinweises auf die Patenterteilung: **07.07.2021**
(21) Anmeldenummer: 13166759.4
(22) Anmeldetag: 07.05.2013
(51) Int. Cl.: B25J 19/00, B25J 9/10

(54) **Roboterarm mit einer Justagevorrichtung**
Robot arm with an adjusting device
Bras robotisé doté d'un dispositif de réglage

(30) Priorität: 15.05.2012 DE 102012208098
(43) Veröffentlichungstag der Anmeldung: 20.11.2013
(73) Patentinhaber: KUKA Deutschland GmbH, 86165 Augsburg (DE)
(72) Erfinder: Nitz, Gernot, 86368 Gersthofen (DE); Liebl, Franz, 86551 Aichach (DE)
(74) Vertreter: Böss, Dieter Alexander

(56) Entgegenhaltungen:
- EP-A1- 1 679 160
- US-A- 3 759 563
- US-A- 5 771 753

## Beschreibung

Die Erfindung betrifft einen Roboterarm eines Industrieroboters. Der Roboterarm umfasst einen Flansch und eine Justagevorrichtung zum Justieren des Flansches.

Industrieroboter umfassen in der Regel einen Roboterarm und eine Steuervorrichtung. Der Roboterarm umfasst normalerweise einen Flansch zum Befestigen eines Endeffektors und mehrere, hintereinander angeordnete und über Gelenke verbundene Glieder, von denen eines der Glieder dem Flansch unmittelbar vorgelagert ist, wobei der Flansch bezüglich einer Achse relativ zu diesem Glied drehbar gelagert ist. Für eine zufriedenstellende Funktionsweise des Industrieroboters werden normalerweise die Stellungen der einzelnen Glieder und insbesondere die Stellung des Flansch relativ zu dem dem Flansch unmittelbar vorgelagerten Glieds justiert.

Die EP 1 679 160 A1 beschreibt eine Vorrichtung zur Justage mit einem Initialisierungsschalter, der einen Stößel umfasst, wobei die Justagevorrichtung mittels eines Spannringes umfangsseitig eines Gliedes eines Roboterarms befestigt ist, derart, dass der Stößel des Initialisierungsschalter in der Initialisierungsstellung mit einem Absatz an einem benachbarten anderen Glied des Roboterarms zusammenwirkt.

Die US 3,759,563 beschreibt einen Roboterarm, der an seinem Flansch einen beweglichen Greifer trägt. Zur Limitierung der Bewegung des Greifers ist ein verstellbarer Ring vorgesehen, der an einem dem Greifer benachbarten Glied des Roboterarm verstellbar befestigt ist und der mittels einer Schraube arretierbar ist, um die Bewegung des Greifers zu begrenzen.

Aufgabe der Erfindung ist es, einen Roboterarm mit einer zum Justieren des Flansches bezüglich dem dem Flansch unmittelbar vorgelagerten Glieds vorgesehenen verbesserten Justagevorrichtung anzugeben.

Die Aufgabe der Erfindung wird gelöst durch einen Roboterarm eines Industrieroboters, aufweisend
- einen zum Befestigen eines Endeffektors vorgesehenen Flansch,
- mehrere, hintereinander angeordnete und über Gelenke verbundene Glieder, von denen eines der Glieder dem Flansch unmittelbar vorgelagert ist und der Flansch bezüglich einer Achse relativ zu diesem Glied drehbar gelagert ist, und
- eine zum Justieren des Flansches bezüglich dem dem Flansch unmittelbar vorgelagerten Glieds vorgesehene Justagevorrichtung, welche einen mittels Schrauben lösbar am Flansch befestigbaren Grundträger mit einem am Grundträger angeordneten Justagemittel aufweist, welches mit einem an dem dem Flansch unmittelbar vorgelagerten Glied angeordneten Gegenjustagemittel zusammen wirkt, wobei die Justagevorrichtung eine Platte aufweist, welche im befestigten Zustand mittels der Schrauben den Grundträger gegen den Flansch drückt.

Der erfindungsgemäße Roboterarm umfasst demnach die Justagevorrichtung, welche wiederum den lösbar vom Flansch befestigbaren Grundträger aufweist. Somit kann die Justagevorrichtung zumindest größtenteils vom restlichen Roboterarm entfernt werden, was gerade bei beengten Platzverhältnissen zwischen dem Flansch und dem dem Flansch vorgelagerten Glied vorteilhaft ist.

Am abnehmbaren bzw. lösbar befestigbaren Grundträger ist das Justagemittel befestigt, welches für ein Justieren des Flansches mit dem Gegenjustagemittel zusammen wirkt. Das Justagemittel ist z.B. als ein beweglicher Taststift mit Spitze oder als Justagepatrone und das Gegenjustagemittel als eine Justagekerbe ausgeführt. Die Justagekerbe bzw. das Gegenjustagemittel verbleibt vorzugsweise fest am relevanten Glied des erfindungsgemäßen Roboterarms, beispielsweise an einem Gehäuse des fraglichen Gliedes.

Der Flansch des erfindungsgemäßen Roboterarms und der Grundträger der Justagevorrichtung weisen vorzugsweise jeweils eine Befestigungsoberfläche auf, die im befestigten Zustand des Grundträgers zueinander zugewandt sind. Die Befestigungsoberflächen sind insbesondere kreisförmig ausgebildet. Um eine möglichst genaue Justage des Flansches zu erreichen, ist es erstrebenswert, dass der Grundträger der Justagevorrichtung gegen Verschieben in zwei rechtwinklig zueinander stehenden Richtungen sowie durch Verdrehen um die Achse gesichert ist. Um dies zu erreichen, weisen nach einer Variante des erfindungsgemäßen Roboterarms die Befestigungsoberflächen wenigstens drei Anlagepunkte auf, die ausgebildet sind, ein Verdrehen und Verschieben des am Flansch befestigten Grundträgers relativ zum Flansch zumindest zu erschweren. Vorzugsweise sind drei Anlagepunkte auf drei winkelig zueinander stehenden ebenen oder gewölbten Funktionsflächen vorgesehen.

Um die Anlagepunkte zu realisieren, kann beispielsweise der Grundträger im am Flansch befestigten Zustand über den Flansch übergestülpt sein, sodass der Grundträger seitlich den Flansch an einem der Anlagepunkte berührt. Es kann auch insbesondere rechtwinklig zur Befestigungsoberfläche des Flansches ein Stift herausragen, der im befestigten Zustand des Grundträgers in der Befestigungsoberfläche des Grundträgers angeordnete Kontaktflächen an zwei der Anlagepunkte berührt.

Um die Kontaktkraft an den Anlagepunkten kontrolliert zu erzeugen, weist nach einer Ausführungsform des erfindungsgemäßen Roboterarms dieser wenigsten ein zwischen dem Grundträger und dem Flansch angeordnetes elastisches Element auf, welches sich am Flansch abstützt. Das wenigstens eine elastische Element drückt insbesondere den Grundträger im befestigten Zustand gegen die Anlagepunkte und/oder ist insbesondere einseitig am Grundträger z.B. mittels Klebens befestigt. Beim Festziehen der Schrauben wird der Grundträger gegenüber dem Flansch durch die Reibung zwischen den Schraubenköpfen der Schrauben und dem Grundträger so verdreht, dass der Grundträger gegen die Anlagepunkte gedrückt wird. Das wenigstens eine elastische Element ist vorzugsweise so bemessen, dass die Belastungen für die Anlagepunkte relativ gering sind, wodurch der Verschleiß relativ gering gehalten wird.

Das wenigstens eine elastische Element ist beispielsweise aus Gummi gefertigt. Das wenigstens eine elastische Element ist beispielsweise als ein Gummiblock oder als eine Schraubenfeder ausgebildet.

Die Justagevorrichtung des erfindungsgemäßen Roboterarms weist eine Platte auf, welche im befestigten Zustand mittels der Schrauben den Grundträger gegen den Flansch drückt. Die Platte ist vorzugsweise als eine Drehscheibe ausgebildet.

Um die Kontaktkraft an den Anlagepunkten kontrolliert zu erzeugen, kann nach einer bevorzugten Ausführungsform des erfindungsgemäßen Roboterarms wenigsten ein zwischen dem Grundträger und der Platte angeordnetes elastisches Element vorgesehen sein, welches sich an der Platte abstützt. Das wenigstens eine elastische Element drückt insbesondere den Grundträger im befestigten Zustand gegen die Anlagepunkte. Das wenigstens eine elastische Element ist vorzugsweise einseitig am Grundträger oder an der Platte befestigt. Beim Festziehen der Schrauben bzw. der Verschraubung Platte/ Grundträger/ Flansch wird die Platte, die vorzugsweise als eine Drehscheibe ausgebildet ist, gegenüber dem Grundträger durch die Reibung zwischen den Schraubenköpfen und der Platte so verdreht, das der Grundträger über eine verstärkte Verformung des wenigstens einen elastischen Elementes gegen die Anlagepunkte gedrückt wird. Durch das wenigstens eine zwischengeschaltete elastische Element zwischen der Platte und dem Grundträger ist die Erhöhung der Kontaktkraft in den Anlagepunkten geringer. Dies schont die Kontaktflächen und reduziert die Verformungen, wodurch eine Justagewiederholgenauigkeit verbessert wird. Das wenigstens eine elastische Element ist beispielsweise aus Gummi gefertigt. Das wenigstens eine elastische Element ist beispielsweise als ein Gummiblock oder als eine Schraubenfeder ausgebildet.

Ausführungsbeispiele sind exemplarisch in den beigefügten schematischen Zeichnungen dargestellt. Es zeigen:
- Fig. 1: einen Industrieroboter mit einer Steuervorrichtung und einem Roboterarm, welcher einen Flansch zum Befestigen eines Endeffektors umfasst,
- Fig. 2: eine Draufsicht des Flansches des Roboterarms,
- Fig. 3: eine Draufsicht einer Justagevorrichtung zum Justieren des Flansches, die nicht der Justagevorrichtung eines erfindungsgemäßen Roboterarms entspricht,
- Fig. 4: eine Draufsicht der an den Flansch angeordneten Justagevorrichtung,
- Fig. 5: eine Seitenansicht der mit dem Flansch verschraubten Justagevorrichtung in einer geschnittenen Darstellung,
- Fig. 6: eine Draufsicht einer an den Flansch angeordneten Justagevorrichtung eines erfindungsgemäßen Roboterarms, und
- Fig. 7: eine Seitenansicht der mit dem Flansch verschraubten Justagevorrichtung eines erfindungsgemäßen Roboterarms in einer geschnittenen Darstellung,

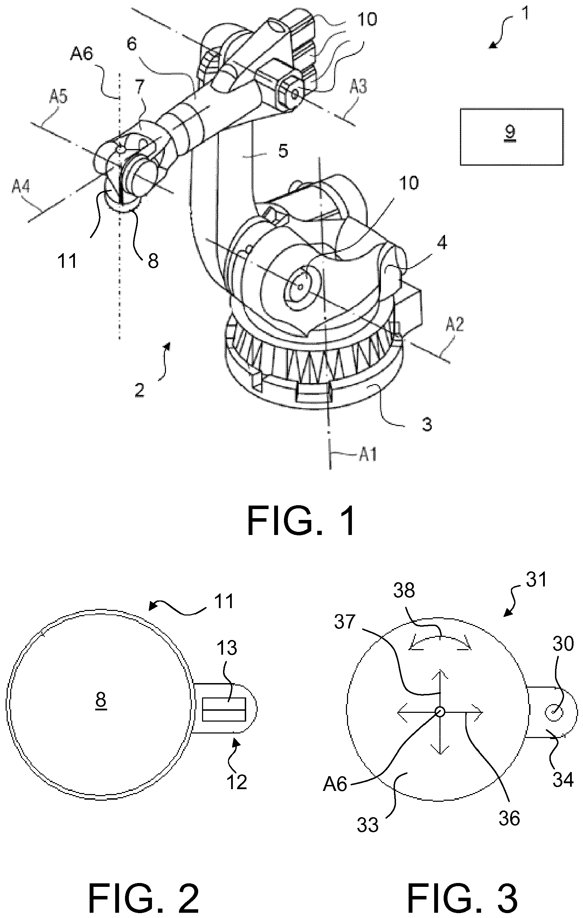

Die Fig. 1 zeigt in einer perspektivischen Darstellung einen Industrieroboter 1 mit einem Roboterarm 2 und einer Steuervorrichtung 9.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einem Flansch 8 zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Achse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6. Die Roboterhand 7 umfasst insbesondere mehrere Glieder, von denen ein Glied 11 dem Flansch 8 unmittelbar vorgelagert ist, sodass der Flansch 8 bezüglich der Achse A6 drehbar zu diesem Glied 11 gelagert ist.

Um den Industrieroboter 1 bzw. dessen Roboterarm 2 zu bewegen, umfasst dieser in allgemein bekannter Weise mit der Steuervorrichtung 9 verbundene Antriebe, die insbesondere elektrische Antriebe sind. In der Figur 1 sind nur einige der elektrischen Motoren 10 dieser Antriebe gezeigt. Auf der Steuervorrichtung 9 läuft ein Rechenprogramm, mittels dem die Steuervorrichtung 9 im Betrieb des Industrieroboters 1 diesen beispielsweise derart ansteuert, dass der Flansch 8 oder ein sogenannter Tool Center Point eine vorbestimmte Bewegung ausführt. Gegebenfalls regelt die Steuervorrichtung 9 die Antriebe, wie dies im Prinzip dem Fachmann bekannt ist. Gegebenfalls sind die elektrischen Antriebe geregelte Antriebe und die Steuervorrichtung 9 erzeugt Soll-Signale für die geregelten Antriebe.

Im Falle des vorliegenden Ausführungsbeispiels ist es vorgesehen, den Flansch 8 bezüglich des dem Flansch 8 unmittelbar vorgelagerten Glieds 11 zu justieren. Eine Draufsicht des Flansches 8 und des dem Flansch 8 unmittelbar vorgelagerten Glieds 11 ist in der Fig. 2 gezeigt.

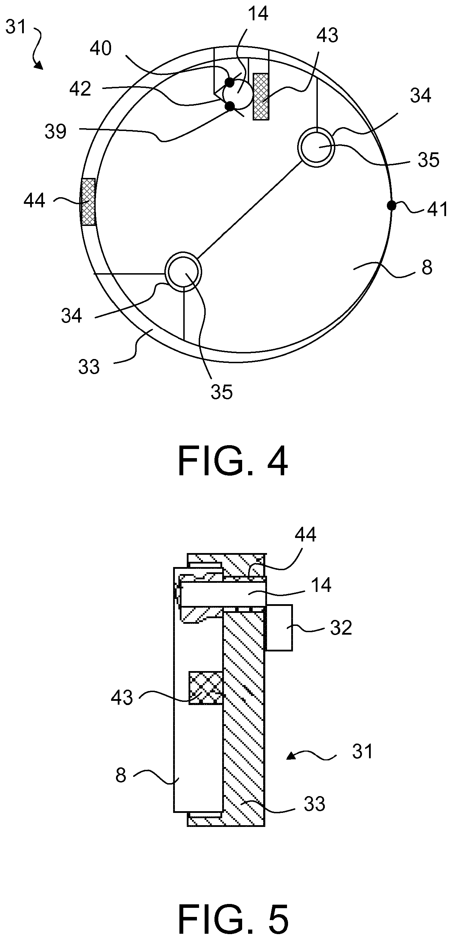

Im Falle des vorliegenden Ausführungsbeispiels ist für das Justieren des Flansches 8 relativ zu dem dem Flansch 8 vorgelagerten Glied 11 eine in den Figuren 3 bis 5 dargestellte Justagevorrichtung 31 eines nicht erfindungsgemäßen Roboterarms vorgesehen, welche für das Justieren insbesondere anstelle des Endeffektors an den Flansch 8 mittels Schrauben 32 lösbar befestigt ist. Die Fig. 3 zeigt die Justagevorrichtung 31 in einer Draufsicht, die Fig. 4 zeigt eine Draufsicht der an den Flansch 8 angeordneten Justagevorrichtung 31 und die Fig. 5 zeigt eine Seitenansicht der mit dem Flansch 8 mittels der Schrauben 32 verschraubten Justagevorrichtung 31 in einer geschnittenen Darstellung.

Im Falle des vorliegenden Ausführungsbeispiels umfasst die Justagevorrichtung 31 einen Grundträger 33, welcher Bohrungen 34 umfasst, um den Grundträger 33 mit dem Flansch 8 zu verschrauben. Der Flansch 8 umfasst für das Verschrauben den Bohrungen 34 des Grundträgers 33 entsprechende Bohrungen 35, welche mit den Gewinden der Schrauben 32 entsprechenden Gegengewinden versehen sind. Der Grundträger 33 ist vorzugsweise aus Metall.

Im Falle des vorliegenden Ausführungsbeispiels umfasst die Justagevorrichtung 31 einen am Grundträger 33 angeordneten Ausleger 34, der mit einem Justagemittel 30 versehen ist. Der Ausleger 34 und der Grundträger 33 sind vorzugsweise aus einem Stück gefertigt. Das Justagemittel 30 ist z.B. als ein beweglicher Taststift mit Spitze ausgeführt.

Im Falle des vorliegenden Ausführungsbeispiels umfasst das dem Flansch 8 vorgelagerte Glied 11 eine Hand oder einen Ausleger 12, welcher mit einem Gegenjustagemittel 13 versehen ist. Das Gegenjustagemittel 13, das z.B. als eine Kerbe ausgeführt ist, ist vorgesehen, dass für das Justieren des Flansches 8 dieses mit dem Justagemittel 30 zusammen wirkt. Das Justagemittel 30 ist insbesondere in nicht dargestellter Weise mit der Steuervorrichtung 9 verbunden, sodass diese von dem Justagemittel 30 stammenden und für das Justieren des Flansches 8 vorgesehenen Signale auszuwerten vermag. Der Ausleger 12 mit dem Gegenjustagemittel 13 ist z.B. am Gehäuse des Glieds 11 angeordnet.

Um eine möglichst genaue Justage des Flansches 8 zu erreichen, ist es erstrebenswert, dass die Justagevorrichtung 31, insbesondere deren Grundträger 33 gegen Verschieben in zwei rechtwinklig zueinander stehenden Richtungen, angedeutet durch Doppelpfeile 36, 37 in der Fig. 3, sowie durch Verdrehen um die Achse A6, angedeutet durch einen Doppelpfeil 38 in der Fig. 3, gesichert ist. Um dies zu erreichen, sind im Falle des vorliegenden Ausführungsbeispiels drei Anlagepunkte, insbesondere ein erster Anlagepunkt 39, ein zweiter Anlagepunkt 40 und ein dritter Anlagepunkt 41 insbesondere auf drei winklig zueinander stehenden ebenen und/oder gewölbten Funktionsflächen vorgesehen.

Der erste Anlagepunkt 39 und der zweite Anlagepunkt 40 werden im Falle des vorliegenden Ausführungsbeispiels durch einen fest mit dem Flansch 8 verbundenen Paßstift 14 realisiert, gegen den der Grundträger 33 mit einer an den Grundträger 33 angeordneten Kerbe 42 drückt. Der Paßstift 14 ragt aus der dem Grundträger 33 zugewandten Oberfläche des Flansches 8 in Richtung der Achse A6, bezüglich derer der Flansch 8 drehbar gelagert ist, heraus. Die Kerbe 42 ist in der dem Flansch 8 zugewandten Oberfläche des Grundträgers 33 angeordnet.

Der dritte Anlagepunkt 41 ist beispielsweise dadurch realisiert, indem der Grundträger 33 im Bereich des dritten Anlagepunktes 41 über den Rand des Flansches 8 gestülpt ist. Vorzugsweise sind der Flansch 8 und der Grundträger 33 kreisförmig und der Grundträger 33 ist umfänglich über den Flansch 8 gestülpt.

Insbesondere der erste und der zweite Anlagepunkt 39, 40, bzw. die Kerbe 42 und der Paßstift 14 sind derart angeordnet, dass der Grundträger 33 beim Festdrehen der Schrauben 32 gegen den Paßstift 14 drückt. Die Anlagekraft an den Anlagepunkten 39-41 werden im Falle des vorliegenden Ausführungsbeispiels durch wenigstens ein elastisches Element, insbesondere durch ein erstes elastisches Element 43 und ein zweites elastisches Element 44 kontrolliert erzeugt.

Die elastischen Elemente 43, 44 sind beispielsweise aus Gummi bzw. sind beispielsweise als Gummiblöcke ausgeführt. Die elastischen Elemente 43, 44 können auch als Schraubenfedern ausgeführt sein.

Die elastischen Elemente 43, 44 stützen sich im Falle des vorliegenden Ausführungsbeispiels am Flansch 8 ab und drücken den Grundträger 33 gegen die Anlagepunkte 39-41. Insbesondere ist das erste elastische Element 43 zwischen dem Flansch 8 und dem Grundträger 33 angeordnet.

Das erste elastische Element 43 ist vorzugsweise einseitig am Grundträger 33 insbesondere durch Kleben befestigt.

Das zweite elastische Element 44 ist in dem Bereich des Grundträgers 33 angeordnet, vorzugsweise einseitig z.B. durch Kleben befestigt, in dem der Grundträger 33 über den Flansch 8 gestülpt ist. Insbesondere ist das zweite elastische Element 44 im Bereich des Grundträgers 33 angeordnet, der dem dritten Anlagepunkt 41 gegenüber liegt.

Beim Festziehen der Schrauben 32 wird der Grundträger 33 gegenüber dem Flansch 8 durch eine Reibung zwischen den Schraubenköpfen der Schrauben 32 und dem Grundträger 33 so verdreht, dass der Grundträger 33 gegen die Anlagepunkte 39-41 gedrückt wird. Aufgrund der elastischen Elemente 43, 44 wird die Belastungen für die Anlagepunkte 39-41 verringert, wodurch der Verschleiß insbesondere des Grundträgers 33 verringert wird.

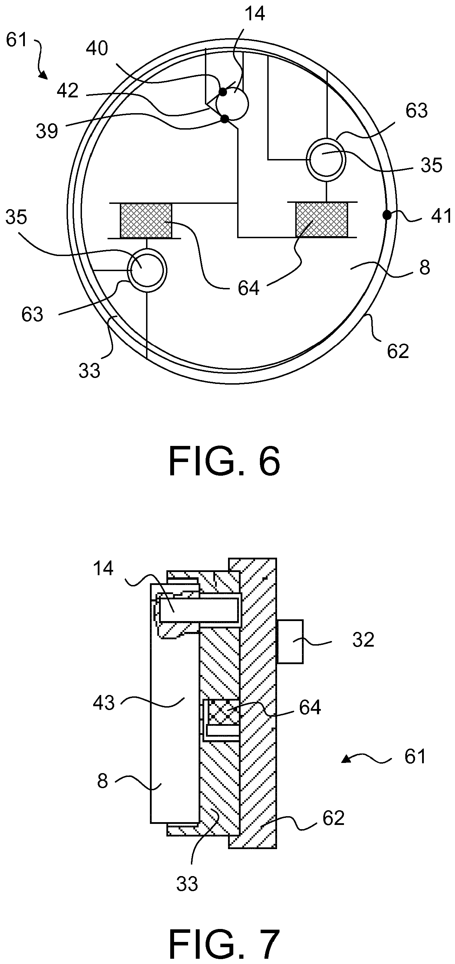

Die Figuren 6 und 7 zeigen eine Justagevorrichtung 61 eines erfindungsgemäßen Roboterarms, welche erfindungsgemäß anstelle der in den Figuren 3 bis 5 gezeigten Justagevorrichtung 31 zum Justieren des Flansches 8 verwendet wird. Wenn nicht anders beschrieben, dann sind Bestandteile der in den Figuren 6 und 7 gezeigten Justagevorrichtung 61, die mit Bestandteilen der in den Figuren 3 bis 5 gezeigten Justagevorrichtung 31 im Wesentlichen bau- und funktionsgleich sind, mit denselben Bezugszeichen versehen.

Die Fig. 6 zeigt eine Draufsicht der an den Flansch 8 angeordneten Justagevorrichtung 61 und die Fig. 7 zeigt eine Seitenansicht der mit dem Flansch 8 mittels der Schrauben 32 verschraubten Justagevorrichtung 61 in einer geschnittenen Darstellung.

Im Gegensatz zu der in den Figuren 3 bis 5 gezeigten Justagevorrichtung 31 weist die in den Figuren 6 und 7 dargestellte Justagevorrichtung 61 neben dem Grundträger 33, an dem der Ausleger 34 mit dem Justagemittel 30 angeordnet ist, eine Platte 62 bzw. eine Drehscheibe auf, welche mittels der Schrauben 32 den Grundträger 33 gegen den Flansch 8 drückt. Die Platte 62 ist vorzugsweise kreisrund. Die Platte 62 umfasst den Bohrungen 35 des Flansches 8 bzw. den Bohrungen 34 des Grundträgers 33 entsprechende Bohrungen 63, durch die die Schrauben 32 geführt sind. Die Schraubenköpfe der Schrauben 32 drücken im verschraubten Zustand gegen die Platte 62, wodurch die Platte 62 den Grundträger 33 gegen den Flansch 8 drückt. Die Platte 62 ist vorzugsweise aus Metall.

Die Anlagekraft an den Anlagepunkten 39-41 werden im Falle des vorliegenden Ausführungsbeispiels ebenfalls durch wenigstens ein elastisches Element, insbesondere durch zwei elastische Elemente 64 kontrolliert erzeugt.

Die elastischen Elemente 64 sind beispielsweise aus Gummi bzw. sind beispielsweise als Gummiblöcke ausgeführt. Die elastischen Elemente 64 können auch als Schraubenfedern ausgeführt sein. Die elastischen Elemente 64 sind beispielsweise einseitig an der Oberfläche des Grundträgers 33 z.B. durch Kleben befestigt, die der Platte 62 zugewandt ist. Die elastischen Elemente 64 können auch einseitig an der Oberfläche der Platte 62 z.B. durch Kleben befestigt sein, die dem Grundträger 33 zugewandt ist.

Im Falle des vorliegenden Ausführungsbeispiels sind zwei Schrauben 32 zum lösbaren Befestigen des Grundträgers 33 am Flansch 8 vorgesehen. Insbesondere sind zwei elastische Elemente 64 vorgesehen, von denen eines im Bereich einer der Bohrungen 34, 63 und das andere im Bereich der anderen Bohrung 34, 63 des Grundträgers 33 bzw. der Platte 62 angeordnet ist.

Die elastischen Elemente 64 stützen sich an der zusätzlichen Platte 62 ab und drücken den Grundträger 33 gegen die Anlagepunkte 39-41. Beim Festziehen der Schrauben 32 wird die Platte 62 gegenüber dem Grundträger 33 durch die Reibung zwischen den Schraubenköpfen der Schrauben 32 und der Platte 62 so verdreht, dass der Grundträger 33 über eine verstärkte Verformung der elastischen Elemente 64 gegen die Anlagepunkte 39- 41 gedrückt wird. Durch die zwischengeschalteten elastischen Elemente 64 zwischen der Platte 62 und dem Grundträger 33 kann erreicht werden, dass die Erhöhung der Kontaktkraft in den Anlagepunkten 39-41 geringer ist als bei der in den Figuren 3 bis 5 dargestellten Justagevorrichtung 31. Dies schont die Kontaktflächen zwischen dem Flansch 8 und dem Grundträger 33 in den Bereichen der Anlagepunkte 39-41 und reduziert deren Verformungen, wodurch eine Genauigkeit einer wiederholten Justage (Justagewiederholgenauigkeit) verbessert wird.

## Patentansprüche

1. Roboterarm eines Industrieroboters (1), aufweisend
- einen zum Befestigen eines Endeffektors vorgesehenen Flansch (8),
- mehrere, hintereinander angeordnete und über Gelenke verbundene Glieder (4-7, 11), von denen eines der Glieder dem Flansch (8) unmittelbar vorgelagert ist und der Flansch (8) bezüglich einer Achse (A6) relativ zu diesem Glied (11) drehbar gelagert ist, und
- eine zum Justieren des Flansches (8) bezüglich dem dem Flansch (8) unmittelbar vorgelagerten Glieds (11) vorgesehene Justagevorrichtung (31, 61), welche einen mittels Schrauben (32) lösbar am Flansch (8) befestigbaren Grundträger (33) mit einem am Grundträger (33) angeordneten Justagemittel (30) aufweist, welches mit einem an dem dem Flansch (8) unmittelbar vorgelagerten Glied (11) angeordneten Gegenjustagemittel (13) zusammen wirkt, wobei die Justagevorrichtung (61) eine Platte (62) aufweist, welche im befestigten Zustand mittels der Schrauben (32) den Grundträger (33) gegen den Flansch (8) drückt.

2. Roboterarm nach Anspruch 1, dessen Flansch (8) und dessen Grundträger (33) jeweils eine insbesondere kreisförmig ausgebildete Befestigungsoberfläche aufweisen, die im befestigten Zustand des Grundträgers (33) zueinander zugewandt sind.

3. Roboterarm nach Anspruch 2, bei dem die Befestigungsoberflächen wenigstens drei Anlagepunkte (39-41) aufweisen, die ausgebildet sind, ein Verdrehen und Verschieben des am Flansch (8) befestigten Grundträgers (33) relativ zum Flansch (8) zumindest zu erschweren.

4. Roboterarm nach Anspruch 3, dessen Grundträger (33) im am Flansch (8) befestigten Zustand über den Flansch (8) übergestülpt ist, sodass der Grundträger (33) seitlich den Flansch (8) an einem der Anlagepunkte (41) berührt, und/oder insbesondere rechtwinklig zur Befestigungsoberfläche des Flansches (8) ein Stift (14) herausragt, der im befestigten Zustand des Grundträgers (33) in der Befestigungsoberfläche des Grundträgers (33) angeordnete Kontaktflächen an zwei der Anlagepunkte (39, 40) berührt.

5. Roboterarm nach einem der Ansprüche 1 bis 4, aufweisend wenigsten ein zwischen dem Grundträger (33) und der Platte (62) angeordnetes elastisches Element (64), welches sich an der Platte (62) abstützt.

6. Roboterarm nach Anspruch 5, bei dem das wenigstens eine elastische Element (64) den Grundträger (33) im befestigten Zustand gegen Anlagepunkte (39-41) drückt, und/oder einseitig am Grundträger (33) oder an der Platte (62) befestigt ist.

7. Roboterarm nach Anspruch 5 oder 6, bei dem das wenigstens eine elastische Element (64) aus Gummi gefertigt ist, als ein Gummiblock ausgebildet ist oder als eine Schraubenfeder ausgebildet ist.

## Claims

1. Robot arm of an industrial robot (1), comprising:
- a flange (8) provided for attaching an end effector,
- a plurality of sequentially-positioned members (4-7) connected by means of joints, of which one of the members is mounted immediately before the flange (8), and the flange (8) is mounted to rotate with respect to an axis (A6) relative to this member (11), and
- an adjusting device (31, 61) provided for adjusting the flange (8) with respect to the member (11) mounted immediately before the flange (8) which adjusting device (31, 61) includes a base carrier (33) that can be detachably fastened to the flange (8) by means of screws (32) with an adjusting means (30) arranged on the base carrier (33) which interacts with a counter-adjustment means (13) arranged on the member (11) mounted immediately before the flange (8), wherein
the adjusting device (61) includes a plate, which in the fastened state presses the base carrier (33) against the flange (8) by means of the screws (32).

2. Robot arm according to claim 1, the flange (8) and the base carrier (33) of which each have a securing surface, which is in particular circular, which face one another in the fastened state of the base carrier (33).

3. Robot arm according to claim 2, wherein the securing surfaces have at least three contact points (39-41) which are configured at least to reduce rotation and displacement of the base carrier (33) attached to the flange (8) relative to the flange (8).

4. Robot arm according to 3, whose base carrier (33) in the state fastened to the flange (8) is placed over the flange (8) so that the base carrier (33) is in lateral contact with the flange (8) on one of the contact points (41), and/or a pin (14) extends out particularly perpendicular to the securing surface of the flange (8) which pin in the fastened state of the base carrier (33) has contact with contact surfaces on the securing surface of the base carrier (33) on two of the contact points (39, 40).

5. Robot arm according to any of claims 1 to 4, comprising at least one elastic element (64) disposed between the base carrier (33) and the plate (62), which element is supported on the plate (62).

6. Robot arm according to claim 5, wherein the at least one elastic element (64) presses the base carrier (33) in the fastened state against contact points (39-41), and/or is attached on one side to the base carrier (33) or to the plate (62).

7. Robot arm according to claim 5 or 6, wherein the at least one elastic element (64) is made of rubber, is shaped as a rubber block, or is shaped as a helical coil.

## Revendications

1. Bras de robot d'un robot industriel (1), comprenant
- une bride (8) prévue pour la fixation d'un effecteur terminal,
- une pluralité de membres (4-7, 11) agencés les uns derrière les autres et reliés par des articulations, dont l'un des membres est disposé directement en amont de la bride (8), et la bride (8) est montée rotative par rapport à un axe (A6) relativement à ce membre (11), et
- un dispositif de réglage (31, 61) prévu pour le réglage de la bride (8) par rapport au membre (11) disposé directement en amont de la bride (8), lequel dispositif présente un support de base (33) qui peut être fixé de manière amovible à la bride (8) au moyen de vis (32), comprenant un moyen de réglage (30) qui est agencé sur le support de base (33) et qui coopère avec un moyen de contre-réglage (13) agencé sur le membre (11) disposé directement en amont de la bride (8),
le dispositif de réglage (61) présentant une plaque (62) qui, à l'état fixé, presse le support de base (33) contre la bride (8) au moyen des vis (32).

2. Bras de robot selon la revendication 1, dont la bride (8) et le support de base (33) présentent des surfaces de fixation respectives, réalisées en particulier de forme circulaire et lesquelles, à l'état fixé du support de base (33), sont tournées l'une vers l'autre.

3. Bras de robot selon la revendication 2, dans lequel les surfaces de fixation présentent au moins trois points de contact (39-41) qui sont réalisés pour rendre au moins plus difficile une torsion et un déplacement du support de base (33) fixé à la bride (8) par rapport à la bride (8).

4. Bras de robot selon la revendication 3, dont le support de base (33) est enfilé sur la bride, à l'état fixé sur la bride (8), de telle sorte que le support de base (33) est en contact latéral avec la bride (8) au niveau de l'un des points de contact (41), et/ou une broche (14) fait saillie en particulier perpendiculairement à la surface de fixation de la bride (8) et vient toucher, à l'état fixé du support de base (33), des surfaces de contact agencées dans la surface de fixation du support de base (33), au niveau de deux des points de contact (39, 41).

5. Bras de robot selon l'une quelconque des revendications 1 à 4, présentant au moins un élément élastique (64) agencé entre le support de base (33) et la plaque (62), lequel prend appui sur la plaque (62) .

6. Bras de robot selon la revendication 5, dans lequel ledit au moins un élément élastique (64) presse, à l'état fixé, le support de base (33) contre des points de butée (39-41) et/ou est fixé sur un côté au support de base (33) ou à la plaque (62).

7. Bras de robot selon la revendication 5 ou 6, dans lequel ledit au moins un élément élastique (64) est fabriqué en caoutchouc, est réalisé sous forme de bloc de caoutchouc ou est réalisé sous forme de ressort hélicoïdal.
